# EUROPEAN PATENT APPLICATION

(11) **EP 0 564 826 A2**
(43) Date of publication of application: **13.10.1993**
(21) Application number: 93103639.6
(22) Date of filing: 08.03.1993
(51) Int. Cl.: G06K 9/72

(54) **Resolution of case confusions by majority voting rule in on-line handwriting recognition**

(30) Priority: 07.04.1992 US 864835
(71) Applicant: International Business Machines Corporation, Armonk, N.Y. 10504 (US)
(72) Inventor: Fujisaki, Tetsunosuke, Amond, N.Y. 10504 (US); Ukelson, Michal Ziv, Bronx, N.Y. 10463 (US); Wenstrup, Kenneth Steven, Boca Raton, Fla 33486 (US)
(74) Representative: Schäfer, Wolfgang, Dipl.-Ing.

(57) **Abstract**

In an on-line handwriting recognition system, case confusion is resolved by a majority voting rule. A postprocessing case model makes alphabetic/numeric and upper case/lower case decisions relative to each character in a given word. A word received by a postprocessor counts the non-case-confusable members for each character in a given class. According to the majority of non-case-confusable occurrences for each class, a decision is made whether most of the characters in the word are numeric digits or alphabetic letters, and if letters whether mostly upper case or lower case. The word is then processed again to determine if it should be converted to a similar prototype from a majority case group or whether it should be left unchanged based on the majority of nonconfusable case occurrences.

## Description

### FIELD OF THE INVENTION

This invention is in the field of handwriting recognition, and specifically is directed to solving the problem of differentiating between similarly shaped prototypes belonging to characters associated with different case-grammar classes.

### BACKGROUND OF THE INVENTION

In on-line handwriting recognition systems, the search-embedded case model, when applied to an environment in which base accuracy is low, such as walkup and early stages of training, has difficulties dealing with the following symptoms:
1) For certain alphabets the recognizer tends to be alpha-biased - that is - there is a greater chance of letters coming out on top of the list than of digits&digit symbols. This is due to the smaller proportion of digits in the alphabet.
2) For certain alphabets, such as the English alphabet, the recognizer tends to be lowercase-biased. This is due to the fact that there are more acceptable variations on lowercase prototypes - and therefore the probability of a lowercase prototype showing up on top of the list is higher.
3) Some of the prototypes representing characters of different case groups share a similar shape and are termed confusable characters.

- examples:: single stroke digits 0,1,2,5
versus O,o,l,i,z,Z,S,s.
uppercase C,F,K,O,U,S,X
versus lowercase c,f,k,o,u,s,x.

When given a word in which the first few characters were case-confusable, the search-embedded case model would act as an amplifier to the already-existing bias of the recognizer - and to recover from this, unaffordable backtracking would be necessary. (unaffordable - in terms of the memory and speed restrictions of the notepad environment.)

In such handwriting recognition systems, symbols such as handwriting, when traced on electronic tablets, are typically represented by sequences of x-y coordinate pairs. A fundamental unit of handwriting is the stroke wherein a stroke can be considered as a sequence of points, represented by their respective x-y coordinates, which are generated between a tablet pen-down and pen-up motion of the writer. Characters and symbols are collections or sets of such strokes.

In a character identification system a first processing step is known as segmentation. Segmentation involves pre-processing, prior to processing by the character recognizer, the stroke input data to partition the strokes of a character, a symbol or possibly a word.

Various prior art handwritten segmentation method and apparatus are described in the following documents. In Herbst et al. U.S. Patent No. 4,024,500, May 17, 1977, disclose a segmentation method and apparatus which utilizes a determination of stylus velocity and three precise zones within which characters are analyzed. In Fujisawa et al. U.S. Patent No. 4,654,873, March 31, 1987 disclose a pattern segmenter and analyzer that utilizes a number of hypothetical unit patterns (Col. 2, lines 5-8). At Col. 5, line 61 to Col. 6, line 36 there is described in relation to FIG. 9 a segmentation process and recognition process. Step 703 is said to show that a hypothetical boundary of characters is established based on information in an element attribute list 714 and a form dictionary 950. In Kuzunuki et al. U.S. Patent No. 4,680,804, July 14, 1987, disclose a method of designating either a character or a graphics recognition mode. In Shojima et al. U.S. Patent No. 4,718,103, January 5, 1988, disclose a handwritten pattern recognition system that employs an angular variation between adjacent segments of a handwritten pattern and a dictionary having candidate patterns.

In Yoshida et al. U.S. Patent 4,764,972, August 16, 1988, disclose a recognition system that employs a first memory for storing isolated characters and a second memory for storing interstroke character information. In U.S. Patent 4,805,225, February 14, 1989, D. Clark discloses a general purpose pattern recognition method and apparatus that includes learning and recognition modes and which is constructed of a plurality of basic feature recognizers.

In commonly assigned Fox U.S. Patent 4,727,588, February 23, 1988, disclose an electronic tablet and an all-points-addressable display to create handwritten images of documents which may be easily edited and subsequently stored within an information processing system.

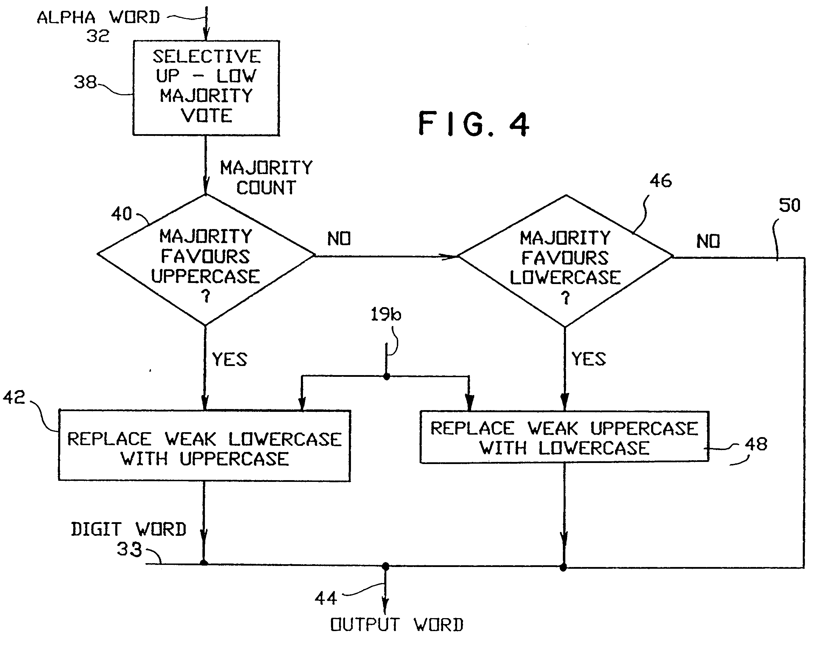

In commonly assigned U.S. Patent 4,731,857, March 15, 1988, C.C. Tappert discloses a method that involves determining possible segmentation points of handwritten characters and passing all combinations of segments which may be a character to a character recognizer (Col. 3, lines 47-68). In relation to a Multi-Sort subroutine of FIG. 4, Tappert states that dictionary look-up and syntactic and semantic processing may be used to eliminate letterchain choices for which no valid word exists (Col. 6, lines 45 et seq.). However, the type of syntatic and semantic processing envisioned by Tappert is a computationally expensive process that operates over all input strokes which, for even a relatively simple word, can be a potentially large number of stroke combinations. As such, this process of Tappert may not be suitable for real time character recognition if additional processing such as dictionary look-up is employed. Also, Tappert does not disclose the provision of selectable or switchable syntactic or semantic processing elements.

In commonly assigned U.S. Patent 5,029,223, July 2, 1991, Fujisaki discloses a method and apparatus for identifying a valid symbol or a string of valid symbols from a sequence of handwritten strokes. A method includes the steps of (a) generating in response to one or more handwritten strokes a plurality of stroke labels each having an associated score; (b) processing the plurality of stroke labels in accordance with a beam search-like technique to identify those stroke labels indicative of a valid symbol or portion of a valid symbol; and (c) associating together identified stroke labels to determine an identity of a valid symbol or a string of valid symbols therefrom. An aspect of the invention is that each of the constraint validation filters is switchably coupled into a serial filter chain. The switches function to either couple a filter input to a stroke label or decouple the input and provide a path around the filter block. An application writer has available a plurality of constraint filters. The application writer specifies which one or ones of the constraint filters are to be applied for a specific sequence of strokes. Fujisaki is incorporated herein by reference.

None of the references above teach or suggest the use of a postprocessing case model. According to the present invention, a postprocessing case model is utilized which uses case-grammar context to assist in the recognition of handwriting. This helps in solving the problem of differentiating between similarly shaped prototypes belonging to characters associated with different case-grammar classes.

### DISCLOSURE OF THE INVENTION

In an on-line handwriting recognition system, case confusion is resolved by a majority voting rule. A postprocessing case model makes alphabetic/numeric and upper case/lower case decisions relative to each character in a given word. A word received by a postprocessor counts the non-case-confusable members for each character in a given class. According to the majority of non-case-confusable occurrences for each class, a decision is made whether most of the characters in the word are mostly numeric digits or alphabetic letters, and if letters, whether mostly upper case or lower case. The word is then processed again to determine if it should be converted to a similar prototype from a majority case group or whether it should be left unchanged based on the majority of nonconfusable case occurrences.

### BRIEF DESCRIPTION OF THE DRAWINGS

- FIG. 1: is a block diagram of a handwriting recognition system constructed and operated in accordance with the teaching of the invention;
- FIG. 2: is a detailed block diagram of block φ of FIG. 1;
- FIG. 3: is a detailed flow chart of the alpha-digit case discriminator of FIG. 2;
- FIG. 4: is a detailed flow chart of the up-low case discriminator of FIG. 2;
- FIG. 5: is a detailed flow chart of the selective digit-alpha majority vote block of FIG. 3; and
- FIG. 6: is a detailed flow chart that is indicative of the replace weak digits with alphas block and the replace weak alphas with digits block of FIG. 3.

### BEST MODE OF CARRYING OUT THE INVENTION

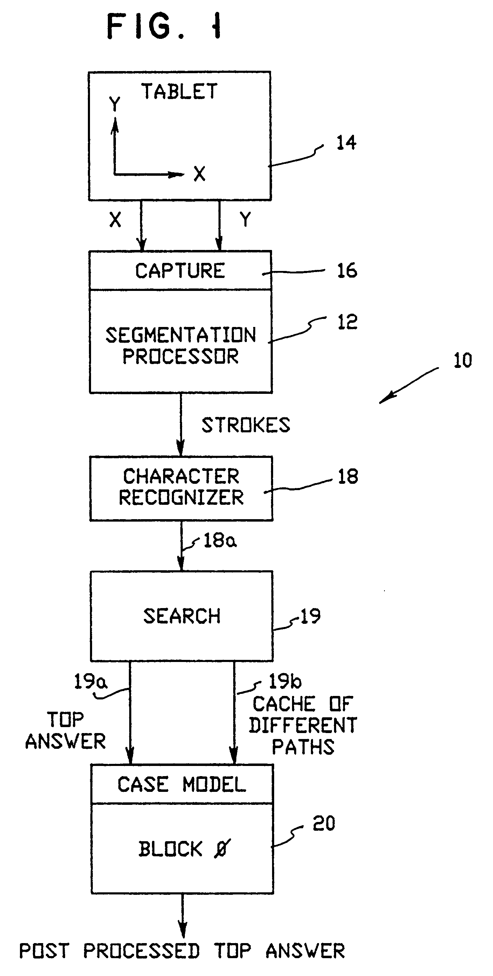

Referring to FIG. 1 there is shown in block diagram form a character recognition system 10 that includes a segmentation processor 12 coupled between an electronic tablet 14 and a character recognizer 18. Tablet 14 can be any of a number of suitable commercially available electronic tablets. The tablet 14 has an associated stylus or pen 15 with which, in a pen-down position, a user forms symbols, such as block printing or script alphanumeric characters, on a surface of the tablet 14. The tablet 14 has x-axis and y-axis output signals expressive of the position of the pen 15 on an x-y tablet coordinate system. A stroke capture means 16 may be a software task which intercepts the x-y outputs from the tablet to generate x-y position pair data for the segmentation processor 12. An output of the segmentation processor 12 is data expressive of connected strokes and unconnected strokes which is input to the character recognizer 18 of the invention. The character recognizer 18 operates to determine an identity of a connected group of segmented strokes and has an output 18a expressive of identified symbols such as alphanumeric characters.

In this regard it should be realized that the invention is applicable to the recognition of a number of hand-drawn symbols wherein a given symbol is composed of at least one segmented stroke. By employing the teaching of the invention the system 10 readily recognizes symbols associated with written characters of various languages and also mathematical and other types of symbols.

The output of character recognizer 18 on line 18a is provided to search block 19 which provides a top answer on line 19a and a cache of different paths on line 19b. A more detailed description of blocks 14-19 can be found in Fujisaki, U.S. 5,029,233 which has been incorporated herein by reference. Postprocessing is is then accomplished in postprocessing block φ20.

The top answer is a result of a search which results in the best candidate for a recognized word, and is an input word to the postprocessor 20. The cache of different paths is a result of a search of the best candidate of recognized characters per recognized word.

The characters are in 4 case classes either 1) alphabetic letters -alphabetic letters include punctuations used in alphabetic context; 2) numeric digits - numeric digits include numeric symbols; 3) upper case letters; 4) lower case letters. There may be confusion with respect to letters in the recognized word with respect to which class it belongs. This confusion is resolved in block 20.

Block 20 in general implements a postprocessing case model to make decisions whether a character is an alphabetic letter or a numeric digit and whether a letter is upper case or lower case as follows.
1) Go over the output word and count the Non-case-confusable members of each class.
   example of digit-alpha: output word " 49zzl8d" would have 3 non-case-confusable digits, (4,9,8) and 1 non-case-confusable letter (d).
   example of up-low: the word "qUICkly" would have 2 non-case-confusable lowercase (q,y) and no non-case-confusable uppercase.
2) According to the majority of non-case-confusable occurrences - make the case decision .
   "49zzl8d" would be chosen as mostly-digit.
   "qUICkly" would be chosen as mostly-lowercase.
3) Having decided upon the majority case, go over the word once more, and for each character make a decision whether or not to convert it using the following criteria:
   a) if it is a case-confusable prototype, convert it to its corresponding similar prototype from the majority case group - using the automaton for the case-grammar. (Ull,lll,UUU,etc).
      example:"qUICkly"- U,I,C would be converted to u,i,c.
      "49zzl8"- z,z,l would be converted to 2,2,1 .
   b) otherwise - leave it unchanged.

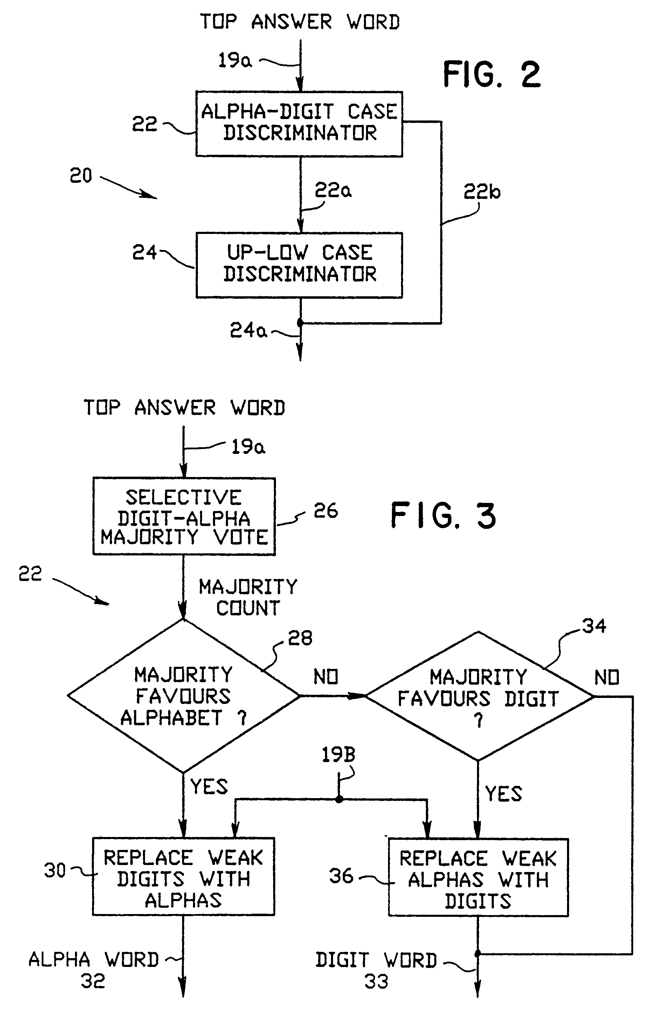

Refer now to FIG. 2 which details the postprocessing block 20 which implements the above. The top answer word on line 19a is applied as in input word to an alpha-digit case discriminator 22 which determines if the character is comprised of more alphabetic letters (class 1) or more numeric digits (class 2). If there are more alphabetic letters, the character is applied via line 22a and a determination is made in block 24 whether or not they are upper case or lower case. If there are more digits, the character is applied via line 22b to output line 24a, which is the output of block 24. This is explained in more detail below.

Refer now to FIG. 3 which details the alpha-digit case discriminator 22 of FIG. 2. The top answer word on line 19a is applied as an input word to selective digit-alpha majority vote block 26 which provides a majority count of whether the majority of characters in the top answer word are 1) alphabetic; 2) numeric; or 3) equal in number of alphabetic and numeric characters.

In decision block 28, a determination is made whether or not the majority count favors alphabetic letters. If so, proceed to block 30 where the weak digits are replaced with alphabetic letters as controlled by the cache different path signal on line 19b. A weak digit is one that is potentially confusable as another alpha. The letter with the highest score replaces the numeric, and the alpha postprocessed all alphabetic word is provided on line 32 as an alpha word for provision to block 24 (FIG. 2 and FIG. 4).

In decision block 28, if the majority does not favor alphabet, proceed to decision block 34 where a determination is made if the majority favors digit. If so, proceed to block 36 where weak alphas are replaced with digits. A weak alpha is one that is potentially confusable as another digit. The digit with the highest score replaces the alpha, and the digit post-processed all digit word is provided on line 33 as a digit word for provision to line 44 (FIG. 4) to form an output word.

In decision block 34, if the majority count does not favor digit, this means the alphabetic letters and the numeric digits in the word are equal in number, so the word is left unchanged and is provided to line 33 for provision to line 44 of FIG. 4 to form an output word.

Refer now to FIG. 4 which details block 24 of FIG. 2. The alpha-postprocessed word on line 32 from block 30 of FIG. 3 is applied to a selective up-low majority vote count block 38 to determine for each character in the alpha word whether it is upper case or lower case. In decision block 40, a determination is made whether or not the majority favors uppercase. If so, proceed to block 42 where weak lowercase letters are replaced as controlled by the cache of different paths signal on line 19b. A weak lowercase letter is one that is potentially confusable as an uppercase letter. The output word is then provided on line 44.

If the majority count does not favor uppercase in decision block 40, proceed to decision block 46 where a determination is made if the majority count favors lowercase. If so, proceed to block 48 where weak uppercase letters are replaced with lowercase letters. A weak uppercase letter is one that is potentially confusable as a lowercase letter. An exception is a first character in a word. The output word is then provided on line 44.

If the majority count does not favor lowercase in block 46, this means that the majority vote does not supply enough information to determine if all upper case or lower case, and such word is provided on line 50 to line 44 as an output word.

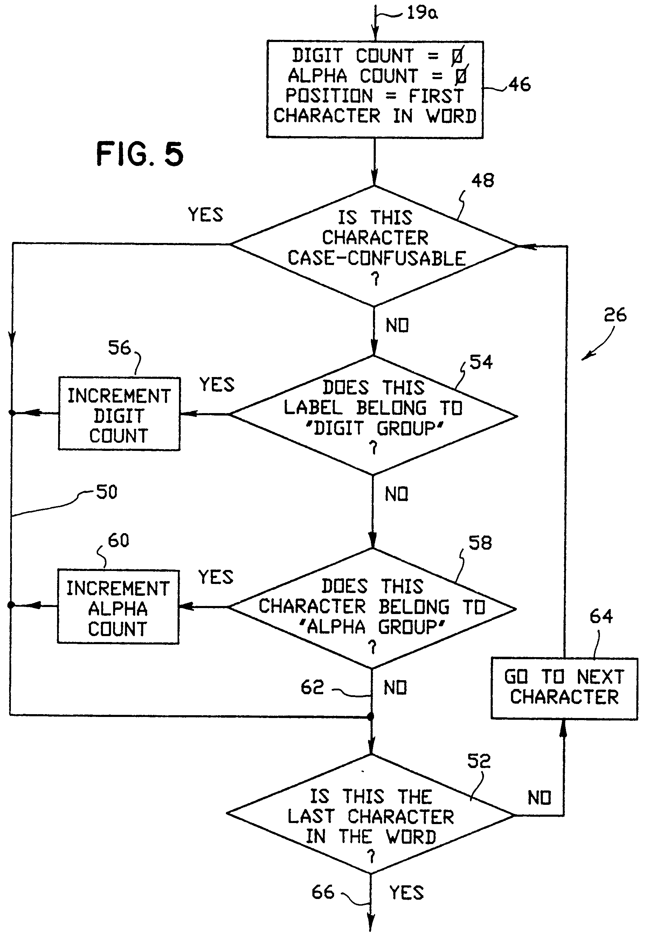

Refer now to FIG. 5 which details the selective digit-alpha majority vote block 26 of FIG. 3. The top answer word on line 19a is applied as in input word to block 46 where the numeric digit count is initialized to zero; the counters are initialized to zero; and the pointer is positioned at the first character in the word. Proceed next to decision block 48 where a determination is made if the first character is case confusable. If it is case confusable, it is not included in the count as it is not yet known if it is a letter or a digit. Then proceed via line 50 to decision block 52 to determine if this is the last character in the word.

If in decision block 48, it is determined that the first character in the word is not case-confusable, proceed to decision block 54 where a determination is made if this character belongs to a digit group. If so, the digit count is incremented in block 56. Proceed then via line 50 to block 52 to determine if this is the last character in the word.

If in decision block 54, the determination is made that the first character is not a digit, proceed to decision block 58 where a decision is made if the first character is an alphabetic letter. If so, the alpha count is incremented in block 60. Proceed then to block 52 to determine if this is the last character in the word.

If in decision block 58 a determination is made that the first character is not alphabetic, this means it is a form of punctuation which can be associated with either alpha or digit, such as a period (.), comma (,) etc. Proceed then to block 52 to determine if this is the last character in the word. If not, proceed to block 64 to proceed to the next character in the word. Proceed to decision block 48 where the just explained process proceeds for the second character in the word. This proceeds until the last character in the word is processed as determined in decision block 52. When this occurs as indicated at line 66, the content of the digit count in block 56 and the content of the alpha count in block 60 is examined by the alpha-digit case discriminator 22 as previously explained relative to FIG. 3.

Similar logic to that in FIG. 5 is included to determine upper case and lower case majority count. In this instance, there would be an upper case count, a lower case count and attendant logic, which operates in a like manner to the logic of FIG. 5.

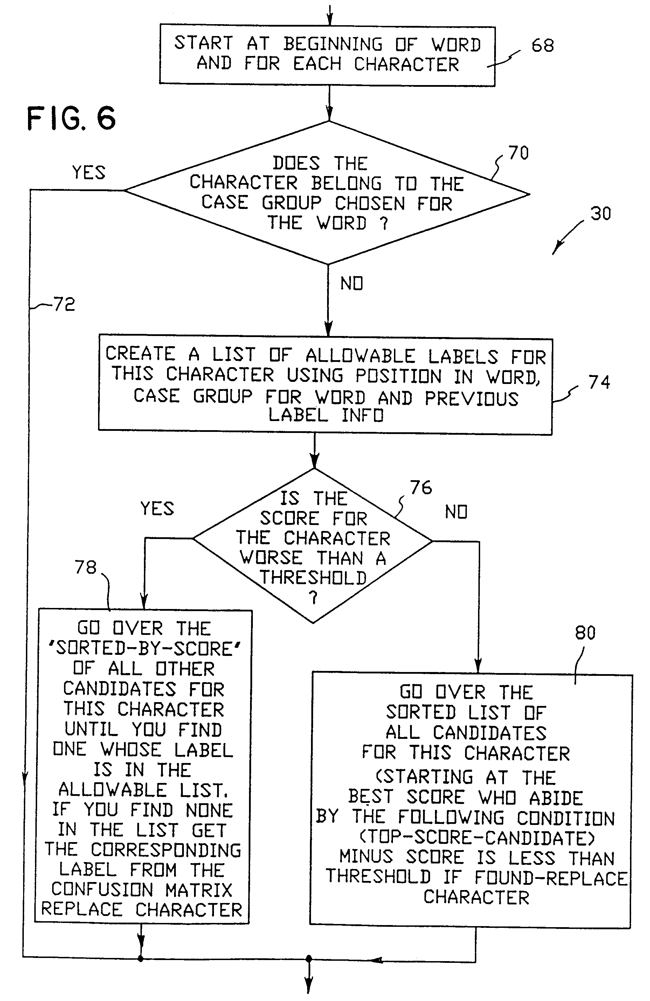

Refer now to FIG. 6 which details block 30 of FIG. 3. It is to be understood block 36 functions in a like manner. As previously stated, the function of block 30 is to make decisions relative to replacing weak digits with letters, whereas the function of block 36 is to make decisions relative to replacing weak letters with digits.

In block 68, start at the beginning of a word and for each character in the word do the following:

In decision block 70, a determination is made whether or not the character belongs to the case group chosen for the word. In this instance, is the character a letter? If so, proceed to line 72 which is indicative that no replacement is needed. If it is not a letter, i.e., it is a digit, proceed to block 74 to create a list of allowable labels for this character using the position in the word, the case group of the word and previous label information for the word. The use of labels is explained in Fujisaki, U.S. Patent 5,029,223.

Proceed to decision block 76 to determine if the score for this particular character is worse than a predetermined threshold. This would indicate a low level of confidence in the originally chosen label for this character, and would allow more aggressive means of replacement. If so, proceed to block 78 where all other candidates for this character are gone over by a "sorted-by-score" technique until one is found whose label is in an allowable list. If none is found in the list, the corresponding label is gotten from a confusion matrix and the character is replaced.

The confusion matrix used is a structure associated with a character prototype set, containing for each existing case-class in the grammar, a list of confusion pairs. Of each confusion pair, one is a prototype of a character belonging to the case-class and the other is a character from a different case class which is similar in shape to the first prototype, and therefore likely to be confused with it.

The confusion matrix is updated by error statistics over test data, using the associated prototype-set, by counting how often each prototype is confused with each one of the other members in the set. These recognition tests are in character-by-character mode, that is, with no context information to assist recognition. Out of the table produced, only the most frequent confusion pairs are kept.

If in decision block 76, it is determined that the score for the character is not worse than the predetermined threshold, proceed to block 80 to go over the sorted list of all candidates for this character (starting at the best score) that abide by the following condition: Top-score - candidate score is less than the threshold. This means that the elastic distance score is within delta of the topscore (close enough to be confused). If found, replace character. This less aggressive attempt at replacement, when the score is good, allows "exceptions to the rule", such as, for example, part-numbers (J2-f23) to pass this filter.

The thresholds are elastic distance scores obtained by statistics over recognizer output characters, comparing them with the intended label to find out if they were correctly recognized, and then sampling the score given to them by the recognizer. Scores of correctly recognized characters were collected and analyzed. Scores for misrecognized characters were collected and analyzed. Score differences between the correct character and the top choice character recommended by the recognizer in case of confusion were collected and analyzed. From this analysis, the following thresholds were concluded:
a) Bad_Score_Threshold . Given that a character has a score higher than this score, the chances of the character having been misrecognized are extremely high. (This usually happens with badly written characters.) In FIG. 6, any character whose score exceeds this threshold will go to box 78 and be aggressively replaced. (By any candidate in the cache belonging to the majority class for this word, or if none exist - by lookup in the confusion matrix).
b) Confusability_Delta_Threshold. Given that one of the candidates in the cache has an elastic match score which is worse (greater than) the top choice score by less than this threshold, Confusability is possible. (Most confusable correct choices in the stats data differed from the top choice by less than this delta). In FIG. 6, this score is used in box 80. Characters replaced in box 80 had an original good score, and therefore will only be replaced if there is a close enough candidate in the cache list which is very likely to have been confused with them.

### INDUSTRIAL APPLICABILITY

It is an object of the invention to provide an improved handwriting recognition system.

It is another object of the invention to provide an improved handwriting recognition system which utilizes a postprocessing case model which uses case-grammar content to assist in the recognition of the handwriting.

It is still another object of the invention to provide an improved handwriting recognition system which solves the problem of identifying similarly shaped prototypes belonging to characters associated with different case-grammar classes.

It is yet another object of the present invention to provide an improved handwriting recognition system which resolves case confusions by a majority voting rule.

It is a further object of the invention to accomplish the above under the real-time speed and memory restrictions of a notepad computer environment.

## Claims

1. A method of resolving case confusion in a handwriting recognition system, said method comprising the steps of:
storing a plurality of prototype characters which belong to case-grammar classes;
sampling handwriting comprised of a plurality of words, with each such word being made up of at least one character;
comparing the sampled handwriting with said plurality of prototype characters to produce, for each sampled word, an output word;
determining if there is case confusion relative to the case-grammar class of any character in the output word, and if so;
resolving the case confusion of said any character in said output word based on the case-grammar classes of the other characters in said output word.

2. A method of resolving case confusion in a handwriting recognition system, said method comprising the steps of:
storing a plurality of prototype characters which belong to case classes including alphabetic, numeric, upper case, and lower case,
sampling handwriting comprised of a plurality of words, with each such word being made up of at least one character of at least one case class;
comparing the sampled handwriting with said plurality of prototype characters to produce, for each sampled word, an output word of at least one character of at least one case class;
providing a list of case confusable members of each confusable case class;
counting the number of non-case-confusable members of each case class in said output word;
determining the majority case class of each character in said output word based on the counted number of non-case-confusable members; and
converting each case-confusable member to its corresponding similar prototype character from the majority case class.

3. The method of claim 2, wherein said case confusable members comprise case confusable pairs.

4. A method of resolving case confusion in a handwriting recognition system, said method comprising the steps of:
storing a plurality of prototype characters which belong to case classes including alphabetic, numeric, upper case, and lower case,
sampling handwriting comprised of a plurality of words, with each such word being made up of at least one character of at least one case class;
comparing the sampled handwriting with said plurality of prototype characters to produce, for each sampled word, an input word of at least one character of a given case class;
providing a list of case confusable members of each case class;
counting the number of non-case-confusable members of each case class in said first word;
determining if the majority of counted non-case-confusable members in said first word are alphabetic, and if so, replacing the numeric characters in said first word with alphabetic characters to produce an alpha word; and if not,
determining if the majority of counted non-case-confusable members in said input word are numeric, and if so, replacing the alphabetic characters in said input word with numeric characters to produce an output word; and if not
leaving said first word unchanged to produce an output word;
counting the number of upper case and lower case characters in said alpha word;
determining if the majority of the counted upper and lower case characters are upper case, and if so, replacing the lower case characters in said alpha word with upper case letters to produce an output word; and if not;
determining if the majority of the upper and lower case characters are lower case, and if so, replacing the upper case characters in said alpha word with lower case characters to produce an output word; and if not;
using the alpha word unchanged as the output word.

5. The method of claim 4 wherein said confusable case members comprise confusable case pairs.

6. The method of claim 5 wherein replacing confusable case pairs is based on a predetermined threshold for characters to be chosen to replace said confusable case pairs.
